# EUROPÄISCHE PATENTSCHRIFT

(11) **EP 0 973 653 B1**
(45) Veröffentlichungstag und Bekanntmachung des Hinweises auf die Patenterteilung: **17.10.2001**
(21) Anmeldenummer: 97931633.8
(22) Anmeldetag: 18.06.1997
(51) Int. Cl.: B60J 5/04

(54) **FAHRZEUGTÜR**
VEHICLE DOOR
PORTIERE DE VEHICULE

(30) Priorität: 26.02.1997 DE 19709835
(43) Veröffentlichungstag der Anmeldung: 26.01.2000
(73) Patentinhaber: SAI Automotive SAL GmbH, 76732 Wörth am Rhein (DE)
(72) Erfinder: SAMWAYS, Dave, D-23715 Bosau (DE); HASSE, Dirk, D-25486 Alveslohe (DE); RAHMSTORF, Peter, F-38380 Saint Laurent du Pont (FR)
(74) Vertreter: Pfenning, Meinig & Partner
(86) Internationale Anmeldenummer: DE9701288
(87) Internationale Veröffentlichungsnummer: WO9838056

(56) Entgegenhaltungen:
- EP-A- 0 286 923
- WO-A-97/06024
- DE-A- 19 526 367
- DE-C- 19 511 105
- "NEXT-GENERATION MODULAR-DOOR SYSTEM" AUTOMOTIVE ENGINEERING, Bd. 103, Nr. 5, Seite 60/61 XP000505530

## Beschreibung

Die Erfindung betrifft eine Fahrzeugtür der im Oberbegriff des Anspruchs 1 beschriebenen Art.

Fahrzeugtüren mit Modulträgern, die in den üblichen Ausschnitt des Türinnenblechs eingesetzt werden und die alle oder zumindest mehrere Aggregate der Türmechanik, wie beispielsweise Fensterheber, Lautsprecher, Schloßbestandteile und ähnliche Elemente vormontiert tragen, finden zunehmend in der Fahrzeugtechnik Verwendung. In allen Fällen wird angestrebt, die elektrischen oder mechanischen Fensterheber am Modulträger vorzumontieren. Dabei ergibt sich folgende Problematik: Aus Gründen der Stabilität der aus Außenhaut (Türaußenblech) und Türinnenblech bestehenden Rohtür muß im Bereich der Fensterlinie (Brüstungsbereich) ein breiter, oftmals noch versteifter Brüstungssteg des Türinnenblechs durchgehend erhalten bleiben, so daß der Ausschnitt des Türinnenblechs deutlich niedriger liegt als die Fensterlinie. Bei einigen Typen von Fensterhebern, wie beispielsweise bei Scherenhebern, bereitet dies bei Benutzung vormontierter Modulträger keine Schwierigkeiten. Diese Fensterheber benötigen jedoch, da sie die Scheibe nicht exakt führen können, im Türhohlraum angebrachte Führungsschienen für die Scheibe, die zusätzlichen Aufwand bedeuten und im Betrieb störanfällig sind. In der Praxis werden daher doppelsträngige Seilzug-Fensterheber bevorzugt, bei denen infolge ihrer Führungsgenauigkeit zusätzliche Führungsschienen entbehrlich sind. Der Nachteil der Seilzugheber ist dabei, daß die Gleitschienen der Scheibenträger so lang sein müssen, wie es der vollen Hubhöhe der Fensterscheibe entspricht. Auf Modulträger vormontierte Seilzugheber sind daher bei Fahrzeugen mit tiefliegender Fensterlinie länger als die lichte Höhe des Ausschnitts im Türinnenblech, was bei der Endmontage der Tür erhebliche Schwierigkeiten bereitet.

Als Lösung wird in der DE 195 11 105 C1 angegeben, die Gleitschienen des Seilzug-Hebers oben über den Modulträger hinausragen zu lassen. Bei der Montage des Modulträgers am Türinnenblech werden die oberen Enden der Gleitschienen unter Verkanten des Modulträgers in den Türhohlraum hinter den Brüstungssteg des Türinnenblechs geschoben und danach der Modulträger in der Türebene in Position gedreht und am Türinnenblech befestigt. Um diese Drehbewegung zu ermöglichen, sind sowohl der Innenblechausschnitt als auch der Modulträger trapezförmig gestaltet. In Anbetracht des Gesamtgewichts eines vormontierten Modulträgers mit allen Aggregaten ist diese Lösung nicht montagefreundlich. Zusätzlich werden Elemente zur Justierung des Modulträgers benötigt, die seine genaue Position, vor allem seine Lage bezüglich der äußeren Fensterführungen, fixieren.

Der Erfindung liegt daher die Aufgabe zugrunde, eine Fahrzeugtür anzugeben, die verbesserte Montagemöglichkeiten für Modulträger mit vormontiertem doppelsträngigen Seilzug-Fensterheber bietet, deren Führungsschienen länger sind als die lichte Höhe des Montageausschnitts im Türinnenblech und somit auch bei niedrigliegender Brüstungslinie des Fahrzeugs einen ausreichenden Hub der Fensterscheibe garantieren. Aufgabe der Erfindung ist es weiterhin, eine Fahrzeugtür anzugeben, bei der die Genauigkeit der Justierung des Modulträgers verbessert und dessen Befestigung am Türinnenblech vereinfacht sind, wobei in jedem Fall eine umlaufende Abdichtung des Modulträgers gegenüber dem Türinnenblech sichergestellt sein soll.

Diese Aufgabe wird durch die Merkmale des kennzeichnenden Teils des Anspruchs 1 gelöst. Die Ansprüche 2 bis 15 geben vorteilhafte Weiterbildungen der Erfindung an.

Dadurch, daß die jeweils in gleicher Höhe liegenden Enden an einer Seite der Führungsschienen des Fensterhebers mit den zugehörigen Seilrollen vom Fahrzeuginnenraum gesehen hinter dem Türinnenblech, die Enden auf der gegenüberliegenden Seite der Führungsschienen mit den zugehörigen Seilrollen vor dem Türinnenblech angeordnet sind, wobei die hinter dem Türinnenblech angeordneten Enden der Führungsschienen nach ihrer Vormontage am Modulträger über dessen Umriß hinausragen, und die vor dem Türinnenblech positionierten Enden der Führungsschienen innerhalb des Umrisses des Modulträgers liegen, ergeben sich gegenüber dem Stand der Technik mehrere Vorteile:
- Die Führungsschienen können unabhängig vom Umriß des Modulträgers die volle Länge, die der Türhohlraum zuläßt, auch nutzen.
- Der Modulträger kann auf seinem gesamten Umfang am Türinnenblech anliegen und abgedichtet werden, und zwar bei einfacher Geometrie der "Dichtungslinie".
- Die Montage des vormontierten Modulträgers ist vereinfacht, da nach dem Einstellen (Einführen) der überstehenden Enden der Führungsschienen in den Türhohlraum (hinter das Türinnenblech) eine einfache "Klappbewegung" genügt, um den Modulträger zu positionieren (keine Gefahr, daß die Dichtung bei einer Drehbewegung verschoben wird).

Diese Vorteile sind unabhängig davon gegeben, ob der Überstand der Führungsschienen oberhalb oder unterhalb der Umrißlinie des Modulträgers angeordnet wird, es ist also die jeweilige Konstruktion individuell möglich.

Bei Ausbildung der Achsen der Seilrollen als Laufhülsen kann der Modulträger durch diese Hülsen direkt mit dem Türinnenblech durch Schrauben, die diese Hülsen durchgreifen, verbunden werden. Die Zahl der Befestigungselemente für den Modulträger verringert sich dadurch. Von besonderem Vorteil aber ist es, daß ein Teil der Kräfte, die auf den Fensterheber wirken, zusätzlich vom Türinnenblech aufgenommen werden.

Die Laufhülsen der Seilrollen können weiterhin in einfacher und vorteilhafter Weise dazu benutzt werden, den Modulträger während der Montage zu positionieren und bei seiner Befestigung am Türinnenblech zu zentrieren. Dazu kann das Türinnenblech Zentrierelemente, beispielsweise in Form von Paßstiften oder -hülsen, besitzen, die in die Laufhülsen eingreifen, und, wenn die Zentrierelemente ein Innengewinde besitzen, als Muttern für die durch die Laufhülsen geführten Befestigungsschrauben des Modulträgers dienen. Derartige Zentrierelemente können, wenn sie in die Laufhülsen der Seilrollen eingreifen, als zusätzliche Montagehilfen dienen. Nach dem Einstellen der Führungsschienen des Fensterhebers (mit den zugehörigen Seilrollen) in den Türhohlraum kann der Modulträger mit den Laufhülsen der Seilrollen ohne zusätzliche Schwenkbewegung auf die entsprechenden Zentrierelemente gehängt oder gestellt werden. Er ist damit genau positioniert und für den Monteur gewichtsentlastet.

Wenn die Führungsschienen des Seilzug-Fensterhebers über den unteren Rand des Modulträgers hinausragen, während ihre oberen Enden innerhalb seines Umrisses angeordnet sind, ergibt sich im Zusammenwirken mit dem Einbuchten des oberen Randes des Türinnenblechs, zumindest im Bereich der oberen Enden der Führungsschienen des Fensterhebers (und der entsprechenden Seilrollen), die Möglichkeit, nach dem Einstellen der unteren Enden der Führungsschienen (und den entsprechenden Seilrollen) in den unteren Bereich des Türhohlraums, gegebenenfalls ermöglicht durch einen entsprechenden Abstand dieser Schienen vom Modulträger, den Modulträger durch einfaches Anlegen an das Türinnenblech in Position zu bringen. Die Seilrollen lassen sich dabei durch geeignete Gestaltung des eingebuchteten Bereichs des Türinnenblechs dicht unter der Fensterlinie anordnen. Die oberen Seilrollen sind dabei zwischen Modulträger und eingebuchtetem Türinnenblech gut geschützt angeordnet. Bei einer derartigen Anordnung ist es vorteilhaft, wenn der Scheibenträger, der aus dem Klemmschuh für die Scheibe und dem auf der Führungsschiene beweglichen Gleitschuh besteht, den eingebuchteten Rand des Türinnenblechs U-förmig umgreift und so der Klemmschuh (und damit der untere Rand der Scheibe) in seiner oberen Stellung der Fensterlinie angenähert wird, wodurch die benötigte Scheibenfläche minimiert werden kann. Werden die Einbuchtungen des Türinnenblechs im Bereich der oberen Seilrollen von Anlageflächen für die umlaufende Dichtung des Modulträgers umrandet, so ist auch bei einer erfindungsgemäß gestalteten Fahrzeugtür die absolute Abdichtung zwischen Modulträger und Türinnenblech sichergestellt.

Besitzt der zur Aufnahme der oberen Seilrollen eingebuchtete Bereich des Türinnenblechs Ausschnitte, in die die Scheibenträger in ihrer oberen Stellung einfahren können, so lassen sich bei Bedarf ihre Klemmschuhe noch näher an die Fensterlinie heranbringen. Alternativ können aber auch die Schenkel der U-förmigen Scheibenträger verkürzt werden, was ihrer Stabilität zugute kommt.

Die Einbuchtungen des Türinnenblechs im Bereich der oberen Seilrollen können vorteilhafterweise als Zurückbiegung (Einbuchtung) der oberen Umrandung in seiner überwiegenden Länge gestaltet werden. Es ergibt sich dann die Möglichkeit, diesen Bereich als integralen Bestandteil einer kastenförmigen Versteifung der inneren Fensterbrüstung zu nutzen. Eine Einbuchtung der oberen Umrandung des Türinnenblechausschnitts auf näherungsweise ganzer Länge hat den zusätzlichen Vorteil, daß die Geometrie der umlaufenden Dichtung zwischen Türinnenblech und Modulträger einfacher und'damit funktionssicherer gestaltet werden kann.

Es ist aber auch ebenso möglich, daß die oberen Enden der Führungsschienen (mit den Seilrollen), über den Modulträger hinausragend, hinter dem Türinnenblech angeordnet werden und die unteren Enden vor dem Türinnenblech. Auf diese Weise können die oberen Seilrollen optimal der Brüstungslinie der Fahrzeugtür angenähert werden, wodurch der Scheibenträger besonders kompakt (und damit steif) ausgebildet werden kann.

Die Führungsschienen des Fensterhebers mit Seilrollen, Scheibenträgern und Zugseilen sind im Türhohlraum angeordnet, also im Feuchtbereich der Fahrzeugtür. Alle anderen vormontierbaren Bauelemente, wie Fensterhebermotor, Lautsprecher, Türschloßbetätigung und Verkabelung werden zweckmäßigerweise auf der dem Fahrzeuginnenraum zugewandten Seite in napfförmigen Vertiefungen angeordnet. Sie sind damit vor Feuchteeinwirkung geschützt und auch einer Kontrolle und Wartung gut zugänglich, ohne daß der Modulträger vom Türinnenblech demontiert werden muß. Besteht der Modulträger dabei aus einem faserverstärkten Kunststoff, beispielsweise aus einem faserverstärkten Thermoplast, so bereitet einmal seine Formgebung (Montagenäpfe für Bauelemente) keine Schwierigkeit, zum anderen erhöht sich seine Schlagzähigkeit, wodurch er zur inneren Sicherheit der Fahrgastzelle beim Seitenaufprall beitragen kann. Eine weitere Verbesserung der inneren Sicherheit der Fahrgastzelle ergibt sich, wenn der Modulträger einen oder mehrere die Stoßenergie zusätzlich absorbierende Bereiche aufweist. Diese können direkt an den Modulträger angeformte Bereiche sein (z.B. stufenpyramidenförmige Näpfe) oder anmontierte Prallkissen aus zäh-nachgiebigem Material. Werden alle Enden der Führungsschienen des Fensterhebers mit dem Türinnenblech fest verbunden, so ergibt sich im Zusammenwirken von Türinnenblech Modulträger, dessen napfförmigen Montagevertiefungen, seinen Energieabsorptionsbereichen und den Führungsschienen des Fensterhebers ein gegen Seitenaufprall optimal versteiftes Gesamtsystem, besonders dann, wenn das Türinnenblech einen versteifenden Mittelsteg besitzt. Da der Modulträger durch eine einfache Klappbewegung positionierbar ist, ist ein derartiger Steg konstruktiv zu verwirklichen.

Die Seile des Fensterhebers überkreuzen sich zwischen den Führungsschienen. In diesem Bereich können sie in Hülsen geführt werden, die von Fixierstücken gehalten werden, die rückseitig (d.h. im Türhohlraum) am Modulträger angeformt oder anmontiert sind. Diese Fixierstücke können Schnappelemente in Form von Nocken oder Noppen besitzen, in die bei der Vormontage die Führungshülsen der Zugseile einrasten.

Die Erfindung wird nunmehr anhand der Figuren näher erläutert. Es zeigen:
- Fig. 1: eine vereinfachte perspektivische Darstellung der Bauelemente, auf die sich die Erfindung bezieht,
- Fig. 2: eine schematisierte perspektivische Darstellung von Fahrzeugtür, Modulträger und den Führungsschienen des Fensterhebers für den Fall, daß die unteren Enden der Führungsschienen hinter dem Türinnenblech angeordnet sind,
- Fig. 3: den in Fig. 2 markierten Schnitt I-I für den Fall der herabgelassenen Scheibe,
- Fig. 4: in gleicher Darstellung wie in Fig. 3 den Fall der geschlossenen, in der oberen Stellung befindlichen, Scheibe,
- Fig. 5: vergrößert eine obere Seilrolle mit Einzelheiten der Lauf- und Zentrierhülse sowie die Befestigung des Modulträgers am Türinnenblech,
- Fig. 6: eine Seilrolle und das untere Ende einer Führungsschiene des Fensterhebers im Türhohlraum, und zwar für den Fall der frei in den Türhohlraum ragenden Rolle (Schnitt II-II in Fig. 2),
- Fig. 7: in gleicher Darstellung wie Fig. 6 ein Beispiel für die Möglichkeit, auch die unteren Seilrollen mit dem Türinnenblech, gegebenenfalls unter Zentrierung, zu verbinden,
- Fig. 8: in vergrößerter Darstellung einen Ausschnitt aus Fig. 7 zur Erläuterung der Seilrollenbefestigung und der Zentriermöglichkeit,
- Fig. 9: in Schnittdarstellung das untere Ende einer Führungsschiene des Fensterhebers mit Seilrolle für den Fall, daß die unteren Enden der Führungsschienen vor dem Türinnenblech angeordnet sind,
- Fig. 10: in gleicher Darstellungsart und für den gleichen Fall wie Fig. 9 die Anordnung der oberen Seilrolle mit Befestigung am Türinnenblech,
- Fig. 11: die in den Fign. 9 und 10 erläuterte Konstruktion, aber ohne Befestigung der oberen Seilrolle bzw. und des oberen Endes der Führungsschiene,
- Fig. 12: in Perspektive die Führungshülsen der Zugseile und die Lage ihrer Fixierung am Modulträger,
- Fig. 13: die perspektivische Ansicht einer möglichen Ausführungsform einer Fixierung der Seilführungshülsen, und
- Fig. 14: in Darstellung des Schnittes III-III in Fig. 12 die Fixierung der Seilführungshülsen zwischen Modulträger mit angeformten Fixierwinkeln und dem Mittelsteg des Türinnenblechs.

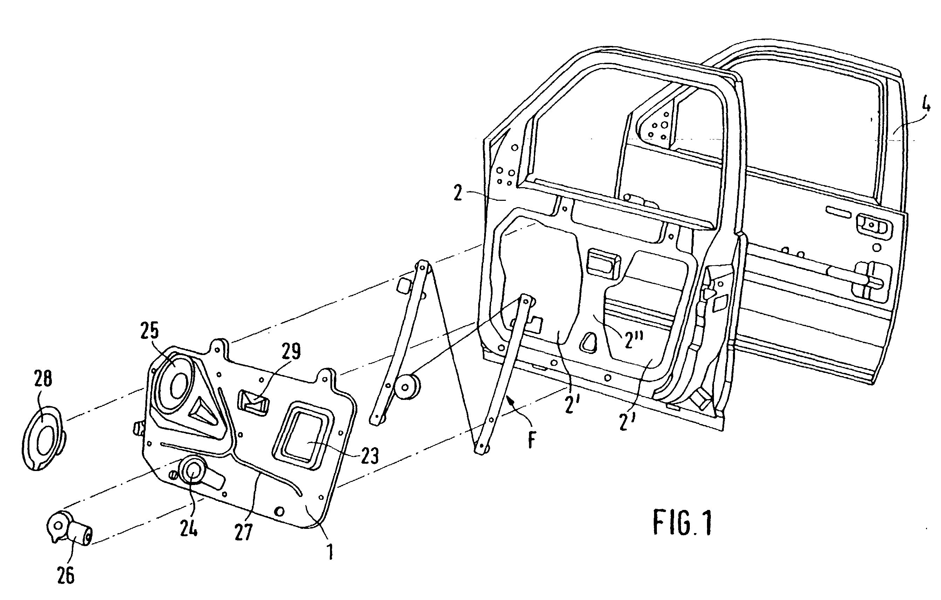

In Fig. 1 ist mit 1 der Modulträger bezeichnet, mit 2 das Türinnenblech, das die Ausschnitte 2' und den Mittelsteg 2" besitzt. Der Fensterheber ist mit F gekennzeichnet. Der Modulträger 1 besitzt napfförmige Vertiefungen 25 für den Lautsprecher, 24 für den Fensterhebermotor und 29 für die Türschloßbetätigung, gegebenenfalls ist auch ein Kabelbaum 27 in einer rinnenförmigen Vertiefung angeordnet. Mit 23 ist ein an den Modulträger 1 angeformter oder anmontierter Stoßabsorber bezeichnet, mit 28 der Lautsprecher und mit 26 der Fensterhebermotor. Die Explosionsdarstellung der Fig. 1 verdeutlicht die räumliche Zuordnung aller Bauelemente.

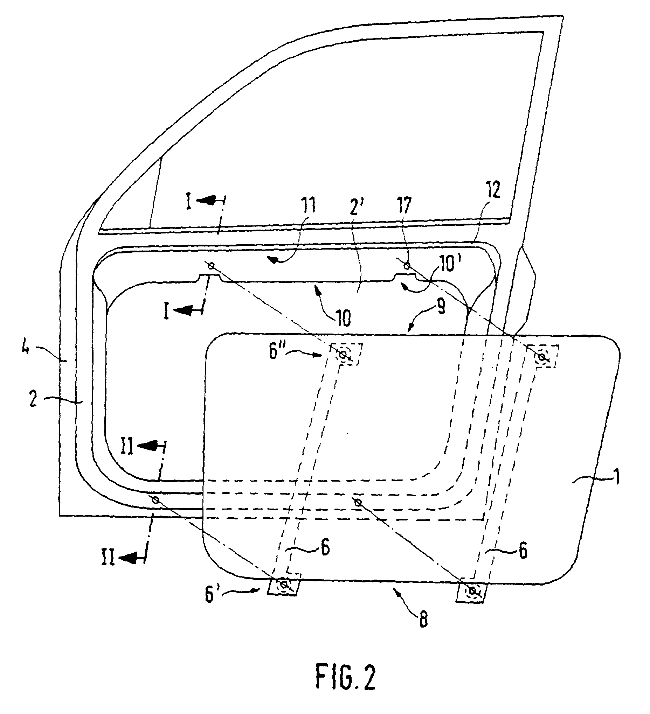

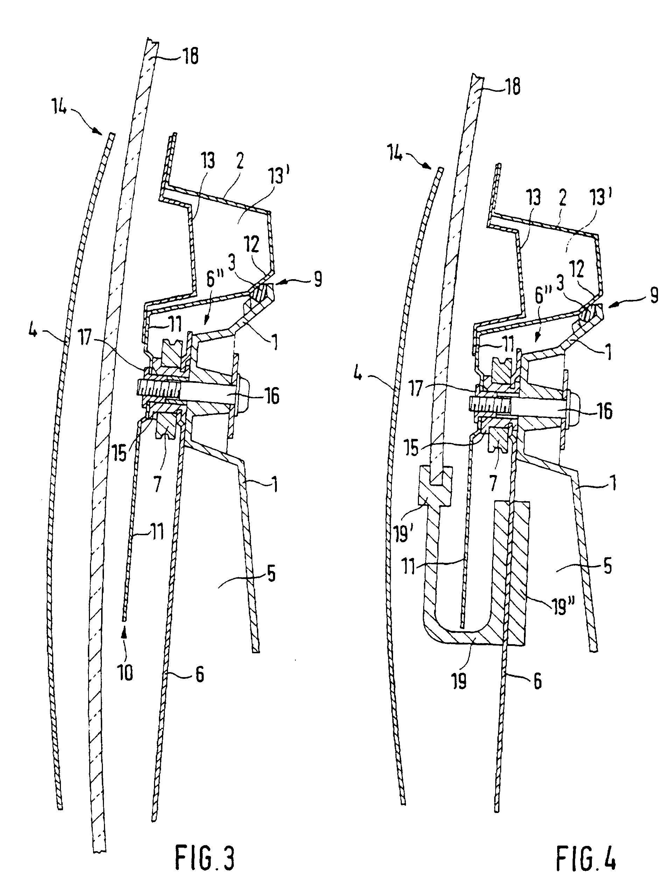

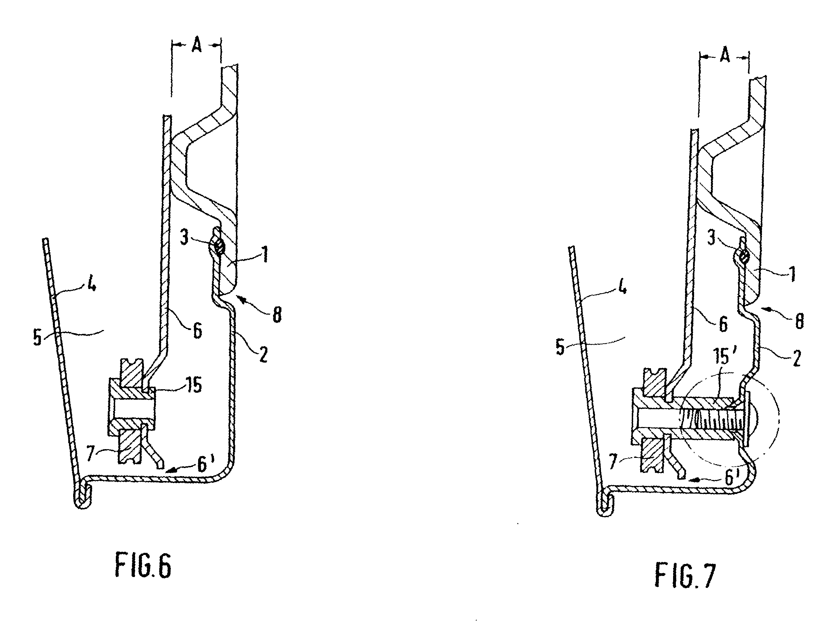

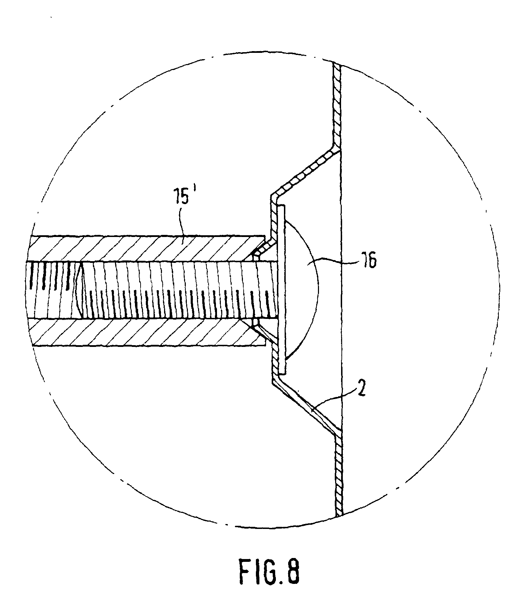

In Fig. 2 ist der Modulträger 1 dargestellt, der im montierten Zustand den einteiligen Ausschnitt 2' des Tür innenblechs 2 abdeckt, wobei er umlaufend mit einer (in Fig. 2 nicht dargestellten) Dichtung gegenüber dem Türinnenblech 2 abgedichtet ist. Für den Fensterheber F sind die Lage der Führungsschienen 6 und der Seilrollen 7 sowie die über den Umriß des Modulträgers 1 hinausragenden Enden 6' (unten) und die innerhalb seines Umrisses liegenden Enden 6" (oben) der Führungsschienen 6 dargestellt. Der obere Umrandungsbereich 11 des Innenblechausschnitts 2' ist, wie dargestellt, eingebuchtet. In diesem Bereich befinden sich die den oberen Seilrollen 7 zugeordneten Zentrierbuchsen 17, und den Ausschnitten 10' der oberen Begrenzungslinie 10 des Innenblechausschnitts 2' sind die Laufhülsen 15 der oberen Seilrollen 7 zugeordnet. Mit 8 ist die untere und mit 9 die obere Begrenzungslinie des Modulträgers bezeichnet. I-I ist die Schnittebene der Fign. 3 bis 5, II-II die der Fign. 6 und 8. Die (in Fig. 2 nicht dargestellte) umlaufende Dichtung des Modulträgers 1 liegt im Bereich der Einbuchtung 11 an der Dichtfläche 12 an. In die Ausschnitte 10' können die Scheibenträger eingreifen.

Fig. 3 erläutert Einzelheiten der Fahrzeugtür im montierten Zustand, und zwar am Beispiel einer oberen Seilrolle, dem Schnitt I-I in Fig. 2 folgend. Die Zentrierhülse 17 ist in dem eingebuchteten Bereich 11 des Türinnenblechs 2 durch Nieten oder Schweißen befestigt. Sie greift in die Laufhülse 15 der Seilrolle 7 ein und zentriert so den Modulträger 1, der mit Hilfe der Schraube 16, die in das Innengewinde der Zentrierhülse 17 einschraubbar ist, direkt am Bereich der Einbuchtung 11 des Innenblechs 2 befestigt ist. Der Bereich oberhalb der Einbuchtung 11 des Türinnenblechs 2 ist durch das Blech 2" zu einem versteifenden Kastenprofil 13 geschlossen, wodurch die Fahrzeugtür insgesamt zusätzliche Stabilität erhält. In das Kastenprofil 13 ist die Dichtfläche 12 integriert, an der die Dichtung 3 anliegt. In Fig. 3 ist die Scheibe 18 eingefahren, d.h. der Scheibenträger 19 befindet sich in seiner unteren Position.

Fig. 4 zeigt in gleicher Darstellung die ausgefahrene Scheibe bei geschlossenem Fenster. Der aus dem Klemmschuh 19' und dem Gleitschuh 19" bestehende Scheibenträger 19 befindet sich in seiner oberen Stellung. Er umgreift U-förmig den unteren Rand 10 des eingebuchteten Bereichs 11 des Türinnenblechs 2 und ermöglicht es so, den unteren Rand der Scheibe 18 nahe an die Fensterlinie 14 heranzuführen. Im dargestellten Fall ist der Rand 10 nicht mit Ausschnitten 10' versehen, so daß die Schenlcellänge des U-förmigen Scheibenträgers verhältnismäßig groß ist. In dem Maße, in dem Ausschnitte 10' konstruktiv möglich sind, können die Schenkellängen des Scheibenträgers 19 verkürzt werden, was seine Stabilität erhöht.

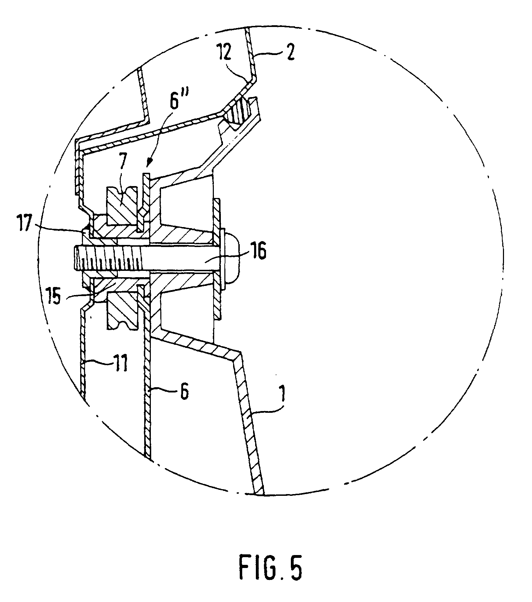

Fig. 5 ist ein vergrößerter Ausschnitt aus Fig. 3, der zeigt, wie die Zentrierhülse 17 in die Laufhülse 15 greift, die mit ihrer Stirnfläche an dem Bereich 11 des Türinnenblechs 2 anliegt und so für festen Halt des Modulträgers 1 sorgt.

Die Fign. 6 und 7 zeigen die Lage der unteren, über den Modulträger 1 hinausragenden Teile der Fensterheber. Fig. 6 demonstriert den Regelfall, bei dem die Gleitschiene 6 und die untere Seilrolle 7 frei in den Türhohlraum 5 hineinragen; Fig. 7 den Fall, daß auch die untere Seilrolle 7 zentrierend mit dem Türinnenblech 2 verbunden ist. Hierbei ist, wie der in Fig. 8 vergrößerte Ausschnitt aus Fig. 7 zeigt, die Laufhülse 15' rückseitig verlängert und weist in dieser Verlängerung ein Innengewinde auf. Das Ende der Laufhülse 15' besitzt eine konische Zentrierfläche, in die eine kegelförmige Ausdrückung des Türinnenblechs 2 zentrierend eingreift. Die in das Innengewinde der verlängerten Laufhülse 15' eingreifende Schraube 16 fixiert dann den über den Modulträger 1 hinausragenden Teil 6' der Führungsschiene 6 und die Seilrolle 7.

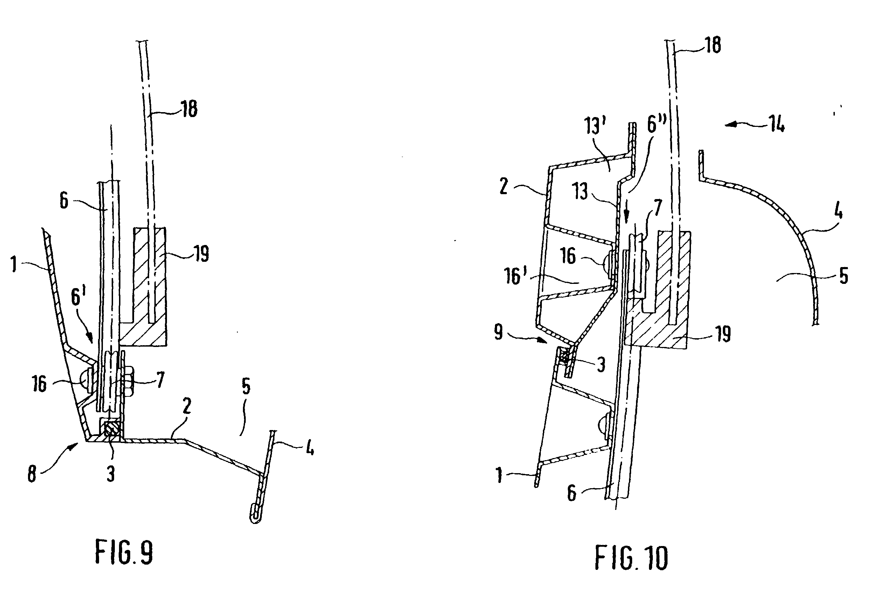

Die Fign. 2 bis 8 beziehen sich auf den Fall, daß die oberen Enden 6" der Führungsschienen 6 und die zugehörigen Seilrollen 7 vor dem Türinnenblech 2 und die unteren Enden 6' dahinter angeordnet sind. Die Fign. 9 bis 11 zeigen die Verhältnisse für den Fall, daß die unteren Schienenenden 6' (mit Seilrollen 7) vor und die oberen Schienenenden 6" hinter dem Türinnenblech 2 zu liegen kommen. Bei gleicher Benennung der Teile zeigt Fig. 9, daß die Anordnung von Schienenende 6' und Rolle 7 vor dem Türinnenblech 2 bei geeigneter Formgebung des Modulträgers 1 problemlos möglich ist, ebenso auch die Befestigung dieser Bauelemente am Türinnenblech 2 mit Hilfe der Schraube 16. Eine Zentrierung der Position des Modulträgers 1 analog der Fig. 8 ist dabei ohne weiteres möglich.

Fig. 10 erläutert die Anordnung des oberen Endes 6" der Führungsschiene 6 (und der Seilrolle 7), und zwar am Beispiel der direkten Befestigung der Führungsschiene 6 am Türinnenblech 2, das im Bereich dieser Befestigung die kastenförmige Brüstungsversteifung 13' napfförmig durchgreift. Auch hier ist entsprechend schon dargestellter Beispiele (Fig. 5) eine Zentrierung des Modulträgers 1 möglich.

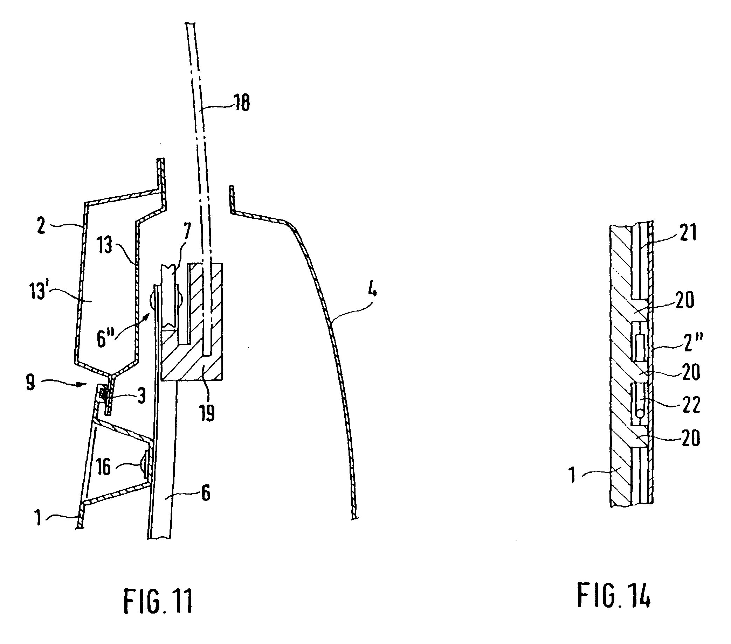

Fig. 11 zeigt bei gleicher Benennung der Bauteile und gleicher Darstellung wie in Fig. 10 den Fall, daß auf eine Verbindung der Führungsschiene 6 mit dem Türinnenblech 2 verzichtet wird.

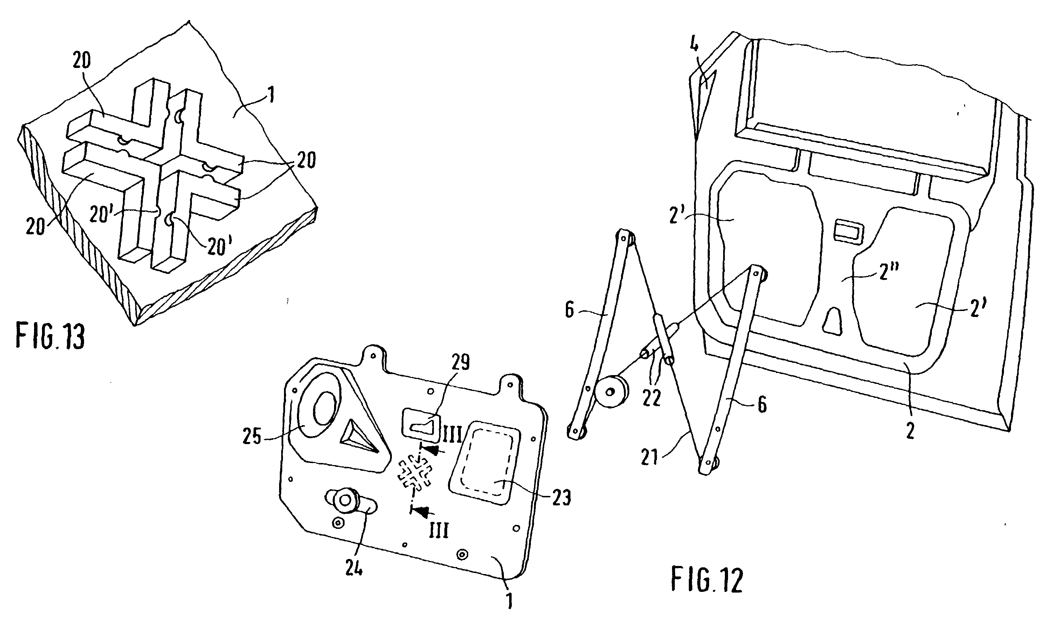

Die Explosionsdarstellung der Fig. 12 soll die Anwendung von Führungshülsen 22 im Überkreuzungsbereich der Zugseile 21 des Fensterhebers erläutern, die durch Halterungen 20 auf der Rückseite des Modulträgers 1 positioniert werden. Die Lage dieser Elemente ist in Fig. 12 punktiert angedeutet, eine mögliche Ausführungsform in Fig. 13 dargestellt. Die Halterungen 20 besitzen Klemmnoppen 20', mit deren Hilfe eine Schnappverbindung mit den Führungshülsen 22 hergestellt wird.

In den Fign. 1 und 12 besitzt das Türinnenblech 2 einen Mittelsteg 2", der den Ausschnitt 2' unterteilt. Mit diesem Mittelsteg 2", der primär, wie schon ausgeführt, der zusätzlichen Versteifung der Fahrzeugtür dient, kann, in Fig. 14 dargestellt, die Halterung 20 mit darin fixierten Seilführungshülsen 22 vollständig abgedeckt werden, wobei gemäß Fig. 14, die den Schnitt III-III in Fig. 12 darstellt, die Halterungen 20 integral an den Modulträger 1 angeformt sind. Insbesondere bei Verwendung von faserverstärkten Thermoplasten als Werkstoff für den Modulträger 1 ist dies eine optimale Lösung.

## Patentansprüche

1. Zweischalige Fahrzeugtür mit einem Modulträger (1), der mindestens einen Ausschnitt (2') in einem Türinnenblech (2) umlaufend abgedichtet abdeckt und so einen von einem Türaußenblech (4), dem Türinnenblech (2) und dem Modulträger (1) gebildeten Türhohlraum (5) vorgibt, wobei im Türhohlraum (5) ein doppelsträngiger Seil-Fensterheber (F) mit zwei Führungsschienen (6) vorgesehen ist,
wobei
ein erstes Paar der jeweils in gleicher Höhe liegenden Enden (6'; 6") der Führungsschienen (6) auf einer Seite des Fensterhebers (F) mit den zugehörigen Seilrollen (7) nach ihrer Vormontage am Modulträger (1) über dessen Umriß hinausragt und vom Fahrzeuginnenraum gesehen hinter dem Türinnenblech (2) angeordnet ist, und
das zweite Paar der Enden (6"; 6') der Führungsschienen (6) auf der gegenüberliegenden Seite mit den zugehörigen Seilrollen (7) nach ihrer Vormontage am Modulträger (1) innerhalb dessens Umrisses liegt,
**dadurch gekennzeichnet, daß**
das zweite Paar der Enden (6"; 6') der Führungsschienen (6) vor dem Türinnenblech (2) angeordnet ist.

2. Fahrzeugtür nach Anspruch 1, **dadurch gekennzeichnet, daß** die Achsen (15) der Seilrollen (7) des Fensterhebers (F) hülsenförmig ausgebildet sind und der Modulträger (1) mit Hilfe von Schrauben (16), die durch die hülsenförmigen Achsen (15) geführt sind, direkt mit dem Türinnenblech (2) verbunden ist.

3. Fahrzeugtür nach Anspruch 2, **dadurch gekennzeichnet, daß** das Türinnenblech (2) Zentrierelemente (17) besitzt, die in die hülsenförmigen Achsen (15) der Seilrollen (7) eingreifen.

4. Fahrzeugtür nach Anspruch 3, **dadurch gekennzeichnet, daß** die Zentrierelemente (17) jeweils ein Innengewinde besitzen, in das die Schraube (16) einschraubbar ist.

5. Fahrzeugtür nach einem der Ansprüche 1 bis 3, **dadurch gekennzeichnet, daß** die unteren Enden (6') der Führungsschienen (6) des Fensterhebers mit den entsprechenden Seilrollen (7) über die untere Umrißlinie (8) des Modulträgers (1) hinausragen, daß die oberen Enden (6") der Führungsschienen mit den entsprechenden Seilrollen (7) innerhalb des Umrisses des Modulträgers (1) angeordnet sind, und daß weiterhin die obere Umrandung (10) des Ausschnitts (2') im Türinnenblech (2) zumindest in den Bereichen der oberen Enden (6") der Führungsschienen (6) des Fensterhebers nach unten offene, zum Türhohlraum (5) vorstehende Einbuchtungen (11) aufweist, die die oberen Enden (6") der Führungsschienen (6) und die zugehörigen Seilrollen (7) aufnehmen.

6. Fahrzeugtür nach Anspruch 5, **dadurch gekennzeichnet, daß** ein von einem Klemmschuh (19') und einem Gleitschuh (19") gebildeter Scheibenträger (19) in seiner oberen Stellung die obere Umrandung (10) des Ausschnitts (2') im Türinnenblech (2) derart U-förmig umgreift, daß der Klemmschuh (19') zwischen dem eingebuchteten Bereich (11) des Türinnenblechs (2) und dem Türaußenblech (4) und der Gleitschuh (19") zwischen dem Modulträger (1) und dem eingebuchteten Bereich (11) des Türinnenblechs (2) angeordnet sind.

7. Fahrzeugtür nach Anspruch 5 oder 6, **dadurch gekennzeichnet, daß** die obere Umrandung (10) des Ausschnitts (2') des Türinnenblechs (2) im oberen Bewegungsbereich des Scheibenträgers (19) Ausschnitte (10') aufweist.

8. Fahrzeugtür nach einem der Ansprüche 5 bis 7, **dadurch gekennzeichnet, daß** die obere Umrandung (10) des Ausschnitts (2') im Türinnenblech (2) in seiner überwiegenden Länge durchgehend eingebuchtet ist.

9. Fahrzeugtür nach einem der Ansprüche 5 bis 8, **dadurch gekennzeichnet, daß** die Einbuchtungen (11) der oberen Umrandung (10) des Ausschnitts (2') im Türinnenblech (2) Bestandteil einer kastenförmigen Versteifung (13) im Bereich der Fensterlinie (14) der Tür sind.

10. Fahrzeugtür nach Anspruch 1, **dadurch gekennzeichnet, daß** die oberen Enden (6") der Führungsschienen (6) mit den Seilrollen (7) über die obere Umrißlinie (8') des Modulträgers (1) hinausragen und hinter dem Türinnenblech (2) angeordnet sind.

11. Fahrzeugtür nach Anspruch 1, **dadurch gekennzeichnet, daß** die auf dem Modulträger (1) vormontierten Bauelemente (26,27,28) auf der dem Fahrzeuginnenraum zugewandten Seite des Modulträgers (1) in napfförmigen Vertiefungen (24,25) angeordnet sind.

12. Fahrzeugtür nach Anspruch 1, **dadurch gekennzeichnet, daß** der Modulträger (1) aus einem faserverstärkten Kunststoff besteht.

13. Fahrzeugtür nach Anspruch 1, **dadurch gekennzeichnet, daß** der Modulträger (1) Stoßenergie absorbierende Bereiche (23) angeformt und/oder anmontiert aufweist.

14. Fahrzeugtür nach Anspruch 1, **dadurch gekennzeichnet, daß** die Führungsschienen (6) des Fensterhebers (F) oben und unten im Bereich der Seilrollen (7) mit dem Türinnenblech (2) verbunden sind, und mit dem Modulträger (1), dessen napfförmigen Vertiefungen (24,25) den stoßabsorbierenden Bereichen (23) und dem Türinnenblech (2), das durch den Verbindungssteg (2") zwischen seinem oberen und unteren Bereich verstärkt ist, ein gegen Seitenaufprall versteiftes Gesamtsystem bilden.

15. Fahrzeugtür nach Anspruch 1, **dadurch gekennzeichnet, daß** die Seile (21) des Fensterhebers (F) im Bereich ihrer Überkreuzung in Führungshülsen (22) geführt sind, die von Fixierwinkeln (20) gehalten sind, die auf der dem Türhohlraum (5) zugewandten Seite des Modulträgers (1) angeordnet sind und Haltenocken (20') besitzen.

## Claims

1. Double-walled vehicle door with a module support (1) which covers, in such a way that it is sealed all round its edges, at least one cut-out area (2') in an inner door panel (2), thereby forming a hollow door chamber (5) which comprises an outer door panel (4), the inner door panel (2) and the module support (1), this hollow chamber (5) containing a dual-cable cable-actuated window lift (F) with two guide rails (6),
whereby
a first pair of the ends (6'; 6") of the guide rails (6) - the two ends being situated at the same height - is located on one side of the window lift (F) with its corresponding pulleys (7), and, being pre-mounted on the module support (1), protrudes beyond the outline of the module support (1), being located behind the inner door panel (2) as seen from the inside of the vehicle, and
the second pair of the ends (6"; 6') of the guide rails (6) is located on the opposite side with its corresponding pulleys (7), and, being pre-mounted on the module support (1), lies within its outline
**characterised by** the fact that
the second pair of the ends (6"; 6') of the guide rails (6) is located in front of the inner door panel (2).

2. Vehicle door as in Claim 1, **characterised by** the fact that the axles (15) of the pulleys (7) of the window lift (F) are in the form of bushings, and that the module support (1) is directly connected to the inner door panel (2) by means of screws (16) which pass through the bushings of the axles (15).

3. Vehicle door as in Claim 2, **characterised by** the fact that the inner door panel (2) has positioning elements (17) which engage with the bushings of the axles (15) of the pulleys (7).

4. Vehicle door as in Claim 3, **characterised by** the fact that the positioning elements (17) each have an internal screw thread into which the screw (16) may be screwed.

5. Vehicle door as in one of Claims 1 to 3, **characterised by** the fact that the lower ends (6') of the guide rails (6) of the window lift with their corresponding pulleys (7) protrude beyond the lower outline edge (8) of the module support (1), that the upper ends (6") of the guide rails with their corresponding pulleys (7) are located within the outline of the module support (1), and that the upper edge (10) of the cut-out area (2') in the inner door panel (2) has - at least in the areas of the upper ends (6") of the guide rails (6) of the window lift - indentations (11) which are open at the bottom and which jut out from the hollow chamber (5), and which accommodate the upper ends (6") of the guide rails (6) and their corresponding pulleys (7).

6. Vehicle door as in Claim 5, **characterised by** the fact that a window mounting (19), consisting of a clamping socket (19') and a sliding block (19"), surrounds - when in its upper position - the upper edge (10) of the cut-out area (2') in the inner door panel (2) in a U-shape so that the clamping socket (19') is located between the indented area (11) of the inner door panel (2) and the outer door panel (4), and the sliding block (19") is located between the module support (1) and the indented area (11) of the inner door panel (2).

7. Vehicle door as in Claim 4 or 5, **characterised by** the fact that the upper edge (10) of the cut-out area (2') in the inner door panel (2) has cut-out areas (10') in the uppermost area of movement of the window mounting (19).

8. Vehicle door as in one of Claims 5 to 7, **characterised by** the fact that the upper edge (10) of the cut-out area (2') in the inner door panel (2) is continuously indented over most of its length.

9. Vehicle door as in one of Claims 5 to 8, **characterised by** the fact that the indentations (11) in the upper edge (10) of the cut-out area (2') of the inner door panel (2) form part of a box reinforcement (13) in the area of the window line (14) of the door.

10. Vehicle door as in Claim 1, **characterised by** the fact that the upper ends (6") of the guide rails (6) with the pulleys (7) protrude above the upper outline (8') of the module support (1), and are located behind the inner door panel (2).

11. Vehicle door as in Claim 1, **characterised by** the fact that the components (26, 27, 28) which are pre-mounted on the side of the module support (1) which faces the inside of the vehicle are located in rounded indentations (24, 25).

12. Vehicle door as in Claim 1, **characterised by** the fact that the module support (1) is made of a fibre-reinforced plastic.

13. Vehicle door as in Claim 1, **characterised by** the fact that the module support (1) has impact-absorbing areas (23) which are integrally moulded into it and/or mounted on to it.

14. Vehicle door as in Claim 1, **characterised by** the fact that the guide rails (6) of the window lift (F) are connected at the top and bottom in the area of the pulleys (7) to the inner door panel (2), and form an overall system of side impact reinforcement in conjunction with the module support (1), its rounded indentations (24, 25), the impact-absorbing areas (23) and the inner door panel (2), which is strengthened by means of the bridge (2") which links its upper and lower areas.

15. Vehicle door as in Claim 1, **characterised by** the fact that the cables (21) of the window lift (F) are fed through guide sleeves (22) at the point where they cross, the guide sleeves being held by securing angles (20), which are located on the side of the module support (1) facing the hollow chamber (5) of the door, and which have holding lugs (20').

## Revendications

1. Portière de véhicule à deux coques comportant un porte-modules (1), qui recouvre circonférentiellement et d'une manière étanche au moins une découpe (2') dans une tôle intérieure de portière (2) et prédétermine ainsi une cavité de portière (5), qui est formée par une tôle extérieure de portière (4), la tôle intérieure de portière (2) et le porte-modules (1), et dans lequel un lève-vitre à câble à deux brins (F) comportant deux rails de guidage (6) est prévu dans la cavité de portière (5),
et dans lequel
un premier couple des extrémités (6'; 6"), situées respectivement à la même hauteur, des rails de guidage (6) fait saillie d'un côté du lève-vitre (F) avec les rouleaux à câble associés (7), après le montage des rails sur le porte-modules (1), au-delà du contour de ce dernier et est disposé, lorsqu'on regarde à partir de l'espace intérieur du véhicule, en arrière de la tôle intérieure de portière (2),
et
le deuxième couple des extrémités (6", 6') des rails de guidage (6) est situé sur le côté opposé, avec les rouleaux à câble associés (7), après le montage préalable des rails sur le porte-modules (1), à l'intérieur du contour de ce dernier,
**caractérisée en ce**
**que** le second couple des extrémités (6", 6') des rails de guidage (6) est disposé en avant de la tôle intérieure de portière (2).

2. Portière de véhicule selon la revendication 1,
**caractérisée en ce que** les axes (15) des rouleaux à câble (7) du lève-vitre (F) sont agencés avec une forme de douille, et le porte-modules (1) est relié directement à la tôle intérieure de portière (2) à l'aide de vis (16), qui sont guidées à travers les axes (15) en forme de douille.

3. Portière de véhicule selon la revendication 2, **caractérisée en ce que** la tôle intérieure de portière (2) comporte des éléments de centrage (17), qui s'engagent dans les axes en forme de douille (15) des rouleaux à câbles (7).

4. Portière de véhicule selon la revendication 3, **caractérisée en ce que** les éléments de centrage (17) possèdent chacun un taraudage, dans lequel la vis (16) peut être vissée.

5. Portière de véhicule selon l'une des revendications 1 à 3, **caractérisée en ce que** les extrémités inférieures (6') des rails de guidage (6) du lève-vitre font saillie avec les rouleaux à câbles correspondants (7) au-delà de la ligne de contour intérieure (8) du porte-modules (1), que les extrémités supérieures (6") du rail de guidage sont disposées, avec les rouleaux à câble correspondants (7), à l'intérieur du contour du porte-modules (1) et qu'en outre le bord supérieur (10) de la découpe (2') formée dans la tôle intérieure de portière (2) comporte, au moins dans les zones des extrémités supérieures (6") des rails de guidage (6) du lève-vitre, des parties en renfoncement (11) qui sont ouvertes vers le bas et font saillie en direction de la cavité de portière (5) et qui logent les extrémités supérieures (6") du rail de guidage (6) et les rouleaux à câble associés (7).

6. Portière de véhicule selon la revendication 5, **caractérisée en ce qu'**un support de vitre (19), qui est formé par un sabot de serrage (19') et un sabot coulissant (19") et entoure, à la manière d'un U, au niveau de sa position supérieure, le bord supérieur (10) de la découpe (2') formée dans la tôle intérieure de portière (2) de telle sorte que le sabot de serrage (19') est disposé entre la partie en renfoncement (11) de la tôle intérieure de portière (2) et la tôle extérieure de portière (4), et le sabot coulissant (19") est disposé entre le porte-modules (1) et la partie en renfoncement (11) de la tôle intérieure de portière (2).

7. Portière de véhicule selon la revendication 5 ou 6, **caractérisée en ce que** le bord supérieur (10) de la découpe (2') de la tôle intérieure de portière (2) possède des découpes (10') dans la zone supérieure de déplacement du support de vitre (19).

8. Portière de véhicule selon l'une des revendications 5 à 7, **caractérisée en ce que** le bord supérieur (10) de la découpe (2') formée dans la tôle intérieure de portière (2) est disposé continûment en renfoncement sur la majeure partie de sa longueur.

9. Portière de véhicule selon l'une des revendications 5 à 8, **caractérisée en ce que** les renfoncements (11) du bord supérieur (01) de la découpe (2') formée dans la tôle intérieure de portière (2) font partie d'un système de renforcement en forme de boîte (13) au niveau de la ligne de fenêtre (14) de la porte.

10. Portière de véhicule selon la revendication 1, **caractérisée en ce que** les extrémités supérieures (6") des rails de guidage (6) font saillie, avec les rouleaux à câble (7) au-delà de la ligne de contour supérieur (8') du porte-modules (1) et sont disposées en arrière de la tôle intérieure de portière (2).

11. Portière de véhicule selon la revendication 1, **caractérisée en ce que** les composants (26, 27, 28), qui sont montés sur le porte-modules (1), sont disposés sur le côté, tourné vers l'espace intérieur du véhicule, du porte-modules (1) dans des renfoncements (24, 25) en forme de boutonnière.

12. Portière de véhicule selon la revendication 1, **caractérisée en ce que** le porte-modules (1) est formé d'une matière plastique renforcée par des fibres.

13. Portière de véhicule selon la revendication 1, **caractérisée en ce que** le porte-modules (1) comporte des parties (23) absorbant des énergies de choc, qui sont moulées et/ou montées sur le porte-modules.

14. Portière de véhicule selon la revendication 1, **caractérisée en ce que** les rails de guidage (6) du lève-vitre (F) sont reliés à leur partie supérieure et à leur partie inférieure au niveau des rouleaux à câble (7) à la tôle intérieure de portière (2), et forment, avec le porte-modules (1), ses renfoncements en forme de boutonnières (24, 25), les parties (23) absorbant les chocs et la tôle intérieure de portière (2), qui est renforcée par la barrette de liaison (2") entre ses parties supérieure et inférieure, un système global renforcé contre les chocs latéraux.

15. Portière de véhicule selon la revendication 1, **caractérisée en ce que** les câbles (21) du lève-vitre (F) sont guidés au niveau de leur intersection, dans des douilles de guidage (22), qui sont maintenues par des cornières de fixation (20), qui sont disposées sur le côté du porte-modules (1) tourné vers la cavité de portière (5), et possèdent des cames de retenue (20').
